# NEUE EUROPÄISCHE PATENTSCHRIFT

(11) **EP 1 915 253 B2**
(45) Veröffentlichungstag und Bekanntmachung des Hinweises auf die Entscheidung über den Einspruch: **30.08.2023**
(45) Hinweis auf die Patenterteilung: 16.10.2013
(21) Anmeldenummer: 06776887.9
(22) Anmeldetag: 16.08.2006
(51) Int. Cl.: B32B 21/00, B27N 3/04

(54) **LEICHTE MEHRSCHICHT HOLZWERKSTOFFPLATTE**
LIGHT-WEIGHT MULTILAYER ENGINEERED WOOD BOARD
PLAQUE LÉGÈRE MULTICOUCHE EN MATÉRIAU DÉRIVÉ DU BOIS

(30) Priorität: 16.08.2005 DE 102005038734
(43) Veröffentlichungstag der Anmeldung: 30.04.2008
(60) Teilanmeldung: 12180598.0
(73) Patentinhaber: Xylo Technologies AG, 9052 Niederteufen (CH)
(72) Erfinder: Michanickl, Andreas, 83101 Thansau (DE)
(74) Vertreter: Pfenning, Meinig & Partner mbB
(86) Internationale Anmeldenummer: PCT/EP2006/008081
(87) Internationale Veröffentlichungsnummer: WO 2007/031166

(56) Entgegenhaltungen:
- EP-A1- 0 573 039
- WO-A2-03/013811
- DD-A1- 240 524
- DE-A1- 2 438 240
- DE-A1- 3 644 067
- DE-A1- 3 736 151
- DE-A1- 4 122 842
- DE-A1- 4 434 876
- DE-A1- 4 438 764
- GB-A- 1 551 940
- JP-A- H02 151 434
- US-A- 2 686 143
- US-A- 3 287 855
- US-A- 3 748 222
- US-A- 4 148 857
- US-A- 5 418 282
- US-A- 5 554 429
- US-A1- 2004 067 334
- US-A1- 2004 067 334
- http://www.fachwerkhaus.de/fh_haus/info/ho lz.htm
- Datenblatt zu dem in der D3 genannten Kunstharz "Picco A100"
- Study report. ,,Differences in number average particle size vs. weight average particle size in a sample of grinded tobacco" von Jorgen Lundin (11 Januar 2013)
- Kawai et al. 1986, Production Technology of Low-density Particleboard I Mokuzai Gakkaishi 32(5):324-330
- Kawai et al. 1986, Physical Properties of low-density Particleboard, Wood Research 72 27-36
- Kallweit 1990. Werkstoffe in der Holzindustrie, Fachbuchverlag Leipzig, Kapitel 2.3 (Furniere), 5. 103-113
- www.engineeringtoolbox.com/wood-density-d 40.html
- Rowell et al. 1989. Dimensional stability, decay resistance, and mechanical properties of veneer-faced low-density particleboards made from acetylated wood Wood and Fiber Science, 21 (1 ):67-79
- Yusuf 1996. Properties Enhancement of Wood by Cross-Lingking Formation and its application in the Reconstituted Wood Products. Wood Research 83:140-210
- Wikipedia Auszug 'Waferboard' (abgerufen am 29. Juli 2013)
- Kaliweit 1990, Werkstoffe in der Holzindustrie, Fachbuchverlag Leipzig, Kapitel 2.6(Faserplatten) und Kapitel 2.7 (Verbundwerkstoffe), S 132-145
- Taschenbuch der Holztechnologie, 1970, VEB Fachbuchverlag Leipzig pp. 114-117,138-199
- TGL 18977/05
- Kawasaki et al. 1999, Sandwich panel of veneer-overlaid low-density fiberboard, J.Wood Sci. 45 291-298
- Steeger 1954, ?Untersuchungen über die Abhangigkeit der Festigkeitseigenschaften von der Spanform bei Holzspanplatten?
- Hata 1993, ?Heat flow in particle mat and properties of particleboard under steam-injection pressing?, Doctoral Thesis at the University of Kyoto
- Lexikon der Holztechnik, VEB Fachbuch Verlag, 3. Auflage 1988, S.526
- Wood Handbook - Wood as Engineering Material, 1999, S. 10-13
- Holzatlas, VEB Fachbuch Verlag, 3. Auflage, 1989, S. 673-674
- Taschenbuch der Holztechnologie, 1970, VEB Fachbuchverlag Leipzig

## Beschreibung

Die Erfindung betrifft eine aus mindestens drei Lagen bestehende Holzwerkstoffplatte, die leicht ist, d.h. insbesondere eine Rohdichte von unter 450 kg/m³ aufweist, und trotzdem alle Vorteile eines klassischen Holzwerkstoffes hat, wie z.B. eine Möbelspanplatte oder eine Mitteldichte Faserplatte (MDF), sowie ein Verfahren zu deren Herstellung und Verwendung.

Spanplatten werden industriell seit etwa 1943 produziert. Versuche, leichte, für den Möbelbau geeignete Spanplatten oder MDF mit stark verdichteten, direkt lackierbaren Deckschichten mit dazu erforderlichen Deckschichtrohdichten um 800 bis 1200 kg/m³ in einem Pressvorgang herzustellen, sind bisher gescheitert, da eine hohe Deckschichtenverdichtung immer auch vergleichsweise hohe Dichten in den Mittelschichten nach sich ziehen. Die durchschnittliche Rohdichte solcher Platten liegt dadurch in der Regel immer über 640 kg/m³.

Gängige Holzwerkstoffe, wie z.B. Spanplatten, Mitteldichte Faserplatten (MDF) oder Oriented Strand Board (OSB) haben eine relativ hohe Rohdichte ab ca. 600 kg/m³. So haben z.B. Möbelspanplatten üblicherweise eine Rohdichte zwischen ca. 660 und 650 kg/m³. MDF für den Möbelbau haben eine Rohdichte, die sich üblicherweise zwischen ca. 740 und 760 kg/m³ bewegt. Solche Platten haben in der Regel aufgrund der hohen Rohdichte sehr geschlossene, feste Deck- und Mittelschichten, die sich sehr gut mit festen und flüssigen Materialien beschichten lassen. Dies betrifft sowohl die Breitflächenbeschichtung wie auch die Schmalflächenbeschichtung. Außerdem lassen sich solche Platten gut bearbeiten. Verbindungsmittel, Beschläge und Scharniere können aufgrund der geschlossen Mittelschicht sehr gut angebracht werden. Die Bearbeitbarkeit ist mit industriellen Verfahren leicht möglich.

Spanplatten, MDF und OSB lassen sich auch leicht mit Rohdichten von unter ca. 500 kg/m³ herstellen. Die Deckschichten werden dann aber so porös, dass solche Platten nur noch sehr schwer mit den üblichen Beschichtungsmaterialien zu beschichten sind. Die Biegefestigkeit wie auch der E-Modul nehmen sehr deutlich ab. Solche Plattenwerkstoffe sind daher nur sehr begrenzt im Möbel- und Innenausbau einsetzbar.

Zahlreiche neuere, leichte Werkstoffe haben eine Mittellage aus einer Wabenstruktur oder anders gearteten Papierstruktur und Decklagen aus Dünn-MDF oder Dünn-Spanplatten mit einer Stärke ab ca. 3 mm aufwärts. Diese Werkstoffe lassen aber keine sog. Freiformbearbeitung oder den Einsatz sehr dünner Holzwerkstoffe mit Decklagen unter 2 mm Dicke zu. Solche neueren Werkstoffe sind darüber hinaus nur sehr schwer zu bekanten und erfordern in aller Regel eine Rahmenkonstruktion sowie spezielle, teure Verbindungsmittel. Festigkeitseigenschaften, wie z.B. Biegefestigkeit, Elastizitätsmodul, Querzugsfestigkeit und Schraubenauszugsfestigkeit sind sehr schlecht ausgeprägt. Eine Feuchtebeständigkeit ist aufgrund der papierhaltigen Mittellage nicht vorhanden.

Überdies sind Wabenplatten und andere Werkstoffe mit einer Mittelage aus einer Papp- oder Kartonstruktur aufgrund der zunehmenden Rohdichte durch den zunehmenden Decklagenanteil ab einer Stärke von unter ca. 22 mm nicht mehr interessant. Der Anteil der schweren Decklagen wird gegenüber dem Anteil der Mittellage zu groß.

Sperrholz in Form von Furniersperrholz wie auch in Form von Stab- und Stäbchenplatten lässt sich ebenfalls aus leichten Holzarten, wie z.B. Pappel- oder Balsaholz herstellen. Da hier aber immer noch Holz in Form von Furnieren oder Stäben zum Einsatz kommt, neigen alle Sperrhölzer dazu, sich zu verwerfen oder zu schüsseln. Darüber hinaus sind Sperrhölzer aufgrund des Vollholzeinsatzes vergleichsweise teuer und industriell nur mit großem Aufwand herzustellen. Weiterhin sind sie nur in einer begrenzten Formatvielfalt herstellbar.

Auch sog. "Kombisperrhölzer", Platten mit einer Stab- oder Stäbchenmittellage und aufgeleimten Decklagen aus Dünn-MDF oder Dünnspanplatten, sind aufgrund des Vollholzeinsatzes vergleichsweise teuer und industriell nur mit großem Aufwand herzustellen. Wie bei Sperrhölzern ist auch hier die Formatvielfalt sehr begrenzt.

Platten aus Stroh lassen sich zwar mit relativ geringer Rohdichte herstellen, sind aber keine wirkliche Lösung, weil Stroh nicht das ganze Jahr über anfällt, und weil die Platten aufgrund der aufwändigen Produktionstechnik teuer sind und damit eine großindustrielle Produktion nicht wirtschaftlich möglich ist. Überdies sind die Deckschichten solcher Strohplatten nicht direkt lackierbar und nur begrenzt mit festen Beschichtungsmaterialien zu beschichten.

Sog. "Triboard" bestehen aus einer Mittellaqe aus OSB-Strands und Decklagen aus MDF-Fasern. Diese Platten werden dadurch hergestellt, dass auf ein Formband zunächst eine Lage MDF-Fasern, dann eine Lage OSB-Strands und schließlich wieder eine Lage MDF-Fasern gestreut wird. Dieses so erzeugte Span-Faservlies wird dann in einer Presse zu Platten mit Rohdichten oberhalb von 600 kg/m³ verpresst. Der Nachteil dieser Platten ist, dass die MDF-Faser-Decklagen sehr ungleichmäßig dick ausgeprägt, und um die Mittelage aus Strands sicher abzudecken, vergleichsweise dick sind.

Andere leichte Werkstoffe haben einen Sandwichaufbau. Man findet Mittellagen z.B. aus Hartschaum, Metallstrukturen, leichtem Massivholz oder dreidimensional durchbrochenen, z.B. welligen Holzwerkstoffplatten und Decklagen aus verschiedenen, flächigen Materialien. Diese leichten Sandwichwerkstoffe sind zum einen sehr teuer, zum anderen sehr aufwändig in der Herstellung. Teilweise sind solche Platten auch nur sehr schwer zu bearbeiten. Auch hier sind die Bekantung und die Verbindung einzelner Teile zu einem Möbelstück sehr schwierig. Die Anzahl an leichten Holzwerkstoffen und anderen leichten, flächenförmigen Werkstoffen liegt weit über 100. Alle bisher existierenden Platten haben das Problem, dass sie nicht industriell in einem großen Format- und Dickenspektrum zu Preisen hergestellt werden können, die mit herkömmlichen Möbelspanplatten konkurrieren können. Diese Werkstoffe sind daher in der Regel nur Nischenprodukte oder nur für Spezialanwendungen geeignet.

Die US 2004/0067334 A1 betrifft ein Verfahren zur Herstellung von OSB-Platten sowie eine OBS-Platte. Die hierfür eingesetzten Fasern weisen eine Länge zwischen 8 und 10 cm auf.

In der WO 03/013811 A2 wird ein Verfahren zur Herstellung einer OSB-Platte mit niedriger Dichte sowie eine entsprechende OSB-Platte beschrieben.

Die EP 0 573 039 A1 betrifft bindemittelhaltige Fasermatten aus Zellulose-bzw. Lignozellulosefasern. Diese sind für die Herstellung von räumlich verformten Formteilen für die Innenverkleidung von Fahrzeugen vorgesehen. Folglich können derartige Mehrschichtmatten dreidimensional verformt werden.

Die DE 44 38 764 A1 betrifft einen Verbundwerkstoff für die Automobilindustrie. Er weist einen mehrschichtigen Aufbau aus einer Kernschicht aus porösem Holzfaservlieswerkstoff und wenigstens zwei damit verbundenen Deck-schichten aus Vliesstoff auf.

Ausgehend von den Nachteilen des Standes der Technik ist es Aufgabe vorliegender Erfindung eine mehrlagige Holzwerkstoffplatte bereitzustellen, die ein stark verringertes Gewicht aufweist, ohne dass dies nachteilige Auswirkungen auf die mechanischen Eigenschaften hat. Weiterhin ist es Aufgabe der Erfindung, ein Verfahren zur Herstellung einer mehrlagigen Holzwerkstoffplatte mit den vorgenannten vorteilhaften Eigenschaften anzugeben.

Diese Aufgabe wird durch mehrlagige Holzwerkstoffplatten mit den Merkmalen des Anspruchs 1 gelöst. Ein Verfahren zur Herstellung einer erfindungsgemäßen Holzwerkstoffplatte gibt Anspruch 18 an. Die abhängigen Ansprüche stellen vorteilhafte Weiterbildungen dar. Die Verwendung der Holzwerkstoffplatte ist in Patentanspruch 32 angegeben.

Erfindungsgemäß wird eine mehrlagige Holzwerkstoffplatte aus mindestens drei miteinander verleimten Lagen bereitgestellt, bei der die mittlere Lage eine Dicke von 6 bis 200 mm aufweist und aus einer Spanplatte, deren Späne zwischen 10 und 40 mm lang und 0,2 und 1 mm dick sind, mit einer Rohdichte unter 500 kg/m³ besteht, die Späne der Mittellage zu 50 bis 80 % aus in Holzfaserrichtung zerspantem Holz bestehen und zu 20 bis 50 % aus nicht oder überwiegend nicht parallel in Holzfaserrichtung zerspantem Holz bestehen und die Decklagen Dicken von 0,5 bis 2 mm aufweisen und aus einer mitteldichten Faserplatte (MDF) bzw. HDF (High Density Fibreboard) oder aus Furnier, HPL oder CPL bestehen, die eine Rohdichte zwischen 550 und 1400 kg/m³ aufweisen.

Durch das geringe Gewicht der Holzwerkstoffplatten entstehen viele Vorteile gegenüber dem Stand der Technik:
- Geringer Rohstoffeinsatz durch geringes Gewicht der Mittellage,
- Geringerer Energieeinsatz für die Herstellung,
- Reduzierung der Transportkosten, da das Ladevolumen der Transportfahrzeuge im Unterschied zu dem klassischen, schwereren Holzwerkstoff voll ausgenutzt werden kann.
- Erleichtertes Handling der erfindungsgemäßen Platten sowie Handling und Montage daraus hergestellter Möbel und anderer Gegenstände,
- Geringeres Gewicht ermöglicht mehr Teile pro Packstück und damit reduzierte Verpackungskosten.
- Reduzierte Kraftstoffkosten beim Transport,
- Geringes Gewicht und großes Dickenspektrum ermöglichen größere Designvielfalt,
- Kostengünstiger als andere Leichtbauwerkstoffe.

In einer vorteilhaften Ausführungsform sind die Decklagen mitteldichte Faserplatten (MDF) bzw. HDF (High Density Fibreboard). Im Falle von MDF- oder HDF-Deckplatten ist es bevorzugt, wenn diese inhomogen aufgebaut sind, mit feinen Fasern zu der Seite, die später die Außenseite der leichten, mehrlagigen Holzwerkstoffplatte bildet und groben Fasern zu der Seite, die später auf die Mittellage der mehrlagigen Holzwerkstoffplatte aufgeleimt wird. Die feinen Fasern ergeben eine gute lackier- und bedruckbare Oberfläche, die groben Fasern verbessern die Biegefestigkeit und den E-Modul der erfindungsgemäßen mehrlagigen Holzwerkstoffplatte. Bevorzugt ist es weiterhin, wenn für MDF-Decklagen Laub-, und/oder Nadelholz verwendet werden. Die Decklagen können auch bedruck- und/oder lackierbar sein. Dabei weisen die Decklagen bevorzugt eine Rohdichte zwischen 800 und 1200 kg/m³ auf. Weiterhin ist es günstig, wenn die Decklagen eine Dicke zwischen 0,5 und 1,2 mm Dicke besitzen. Gemäß der Erfindung sind auch Ausführungsformen umfasst, bei denen die Decklagen aus unterschiedlichen Materialien bestehen, z.B. einseitig mit HPL oder CPL und einseitig mit Gegenzugpapier oder anderen Gegenzugmaterialien zur Herstellung von Postforming-Elementen, wie z.B. Küchenarbeitsplatten. In einer weiteren vorteilhaften Ausführungsform bestehen die Decklagen aus mit Polyurethanen, Isocyanaten oder mit Polykondensationsklebstoffen gebundenen Dünn-MDF oder Dünn-Spanplatten. Die Decklagen werden dabei insbesondere separat von der Mittelschicht hergestellt.

Insbesondere ist es von Vorteil, wenn die Mittellage eine Rohdichte zwischen 200 kg/m³ und 400 kg/m³, besonders bevorzugt zwischen 250 kg/m³ bis 380 kg/m³ aufweist. Dabei sollte möglichst die Mittellage gleichmäßig dick und homogen aus einer Schicht Späne aufgebaut sein. Ebenso ist es günstig, wenn die Mittellage aus Spänen mit einer sehr geringen Schüttdichte von unter 120 kg/m³, vorzugsweise mit einer Schüttdichte von unter 80 kg/m³ bezogen auf absolut trockenes Material aufgebaut ist.

Der Spanherstellung und Geometrie der verwendeten Späne kommt bei der Herstellung der Mittellage eine besondere Bedeutung zu. So sollten in den Spänen für die Mittellage, im Hinblick auf hohe Querzug- und Druckfestigkeiten sowie eine geringe Rohdichte, vorteilhafterweise kein Feingut unter 1 mm Größe, vorteilhafterweise kein Material unter 3 mm Größe, möglichst keine Sägespäne sowie andere kubische Späne oder Späne über ca. 0,6 mm Dicke, enthalten sein. Feingut in der beschriebenen Form würde wie ein Füllstoff wirken. Dadurch würde die Mittellage der erfindungsgemäßen Holzwerkstoffplatte deutlich schwerer als gewünscht und erforderlich. Gröbere Späne und kubisches Spanmaterial würden die Platte zu grob machen. Es würden zu wenig kleine Hohlräume zwischen den Spänen in der Mittellage geschaffen. Insbesondere die Oberflächen würden so große "Löcher" aufweisen, dass sehr dünne Decklagen nicht mehr geeignet wären, diese auch bei großer punktueller Belastung ohne Schäden abzudecken.

Die Späne der Mittelage sind daher teilweise zu 50 bis 80 % durch Zerspanen in Holzfaserrichtung entstanden, wie z.B. Hobelspäne oder Holzwolle, und dadurch gezielt ganz oder teilweise gekrümmt und/oder gebogen und dadurch wiederum sehr voluminös sein. So entstehen beim Verpressen der Mittelage zahlreiche kleine Hohlräume, die neben anderen Faktoren die geringe Rohdichte der Mittellage der erfindungsgemäßen Platte bewirken.

Erfindungsgemäß besteht die Spanmischung der Mittellage zu 50 bis 80 % aus Spänen, die durch Zerspanung von Holz in Holzfaserrichtung hergestellt werden, wie z.B. sehr langen Hobel- oder Frässpänen und zu 20 bis 50 % aus Spänen, die durch nicht oder überwiegend nicht paralleles Zerspanen von Holz in Holzfaserrichtung entstehen, wie z.B. Späne aus einem Messerringzerspaner für Hackschnitzel oder Späne aus einem Messerwellenzerspaner oder aus einer Mühle.

Die Spandicken liegen erfindungsgemäß zwischen 0,2 und 1 mm, vorteilhafterweise zwischen 0,2 und 0,6 mm. Die Spanlängen liegen im Hinblick auf eine gute Beleimbarkeit, ein gutes Förderverhalten und ein gutes Streu-verhalten erfindungsgemäß zwischen 10 und 40 mm. Vor allem die in Holzfaserrichtung zerspanten Späne sollten dabei vorteilhafterweise gebogen sein. Die Breite der Späne sollte zwischen 3 und 25 mm liegen, vorteilhafterweise zwischen 3 und 10 mm.

Ein geringes Gewicht der Späne wird auch dadurch sichergestellt, dass die Späne der Mittelage vorzugsweise aus leichten Holzarten, wie Fichte, Kiefer, Tanne, Weide oder Pappel hergestellt werden.

Generell können zur Herstellung der Mittellage alle Spangemische eingesetzt werden, die ein hohes Schüttvolumen erzeugen und beim Verpressen Hohlräume bilden, ohne dass dabei die Zellhohlräume komprimiert werden.

Die geringe Dichte der Mittellage erlaubt es, auch Späne mit höherem Feuchtegehalt zu verpressen. Durch die geringe Dichte kann das Spanvlies beim Verpressen sehr gut ausgasen, ohne dass die Gefahr von sog. Dampfspaltern besteht, wie man sie von der Verpressung herkömmlicher Holzwerkstoffe kennt.

Die Spanfeuchte der Mittellage der erfindungsgemäßen Holzwerkstoffplatte kann bei den beleimten Spänen zwischen 3 und 25 % liegen. Dieser Umstand ermöglicht es, beispielsweise auch Späne aus Hobelwerken oder anderen Massivholz verarbeitenden Unternehmen ohne weitere kostspielige Trocknung zu verwenden, die üblicherweise noch eine Feuchte zwischen ca. 8 und 15 % aufweisen.

Beispielsweise kann die Mittellage als eine einschichtige, homogen aufgebaute, sehr leichte Flachpress-Spanplatte mit möglichst gleichmäßigem Rohdichteprofil bezeichnet werden.

Zusammengefasst weist sie weist folgende Eigenschaftsmerkmale auf:
- Einschichtiger, homogener Aufbau,
- Gewicht vorzugsweise zwischen 200 und 400 kg/m²
- Möglichst gleichmäßiges (flaches) Rohdichteprofil (nicht U-förmig wie bei klassischen Holzwerkstoffen),
- Stärke zwischen ca. 8 und 200 mm,
- Industriell herstellbar,
- Kostengünstig herstellbar,
- Gut zu bekanten, leichtes und zugleich sicheres Einbringen/Fixieren von herkömmlichen Verbindungsmitteln, Beschlägen und Scharnieren,
- Querzugfestigkeit vergleichbar zu typischen Möbelspanplatten,
- Ausreichende Druckfestigkeit für die üblichen Beschichtungsverfahren,
- Geringer Materialeinsatz.

Decklagen und Mittellage werden unterschiedlich hergestellt und erfüllen unterschiedliche Aufgaben:
Die dünnen Deckschichten liefern gute Biegefestigkeiten, hohe Elastizitätsmodule und geschlossene Oberflächen der erfindungsgemäßen Holzwerkstoffplatte. Sie ermöglichen eine gute Beschichtbarkeit mit festen und flüssigen Beschichtungsmaterialien. Sie decken Löcher in den Oberflächen der Mittellagen auch bei starker punktförmiger Beanspruchung der erfindungsgemäßen Holzwerkstoffplatte sicher ab. Das hohe Gewicht der Decklagen fällt aufgrund ihrer geringen Dicken nicht ins Gewicht.

Das Verhältnis der Dicken von Decklagen zu Mittelagen bewegt sich unterhalb 2:5, vorteilhafterweise unter 1:4 und verschiebt sich mit zunehmender Dicke der Gesamtplatte positiv zur leichteren Mittellage. Eine besonders vorteilhafte Ausgestaltung sieht vor, dass das Verhältnis der Dicke von Decklagen zu Mittellage 1:4 bei einer 10 mm dicken erfindungsgemäßen Holzwerkstoffplatte, 1:9 bei einer 20 mm dicken Platte und 1:19 bei einer 40 mm dicken Platte beträgt. Das Verhältnis der Dicke von Decklagen zu Mittellagen bei anderen Plattenstärken lässt sich aus den gegebenen Zahlen linear interpolieren.

Erfindungsgemäß wird ebenso ein Verfahren zur Herstellung einer erfindungsgemäßen Holzwerkstoffplatte bereitgestellt, das sich dadurch auszeichnet, dass die mittlere Lage mit den Decklagen verleimt wird. Dies kann in einer vorteilhaften Weiterbildung beispielsweise über Polyadditions- oder Polykondensationsklebstoffe erfolgen.

Dabei kann die Verleimung der Deckplatten mit der Mittelschicht erst nach der Herstellung der Mittellage, aber auch gleichzeitig mit der Herstellung der Mittellage beim Verpressen der Mittellage erfolgen.

Vorteilhaft ist es, wenn die Decklagen und die Mittellagen separat hergestellt werden.

Bei der Herstellung der Decklagen wird durch vergleichsweise hohe Pressdrücke von in der Regel mehr als 300 N/cm² eine sehr hohe Verdichtung erzeugt, die sich in hohen Festigkeiten und einer hohen Oberflächenverdichtung manifestieren. Die Rohdichte beträgt dabei im Hinblick auf die Erzielung hoher Festigkeiten und einer hohen Oberflächenverdichtung zwischen 550 kg/m³ und 1400 kg/m³, bevorzugt 800 kg/m³ bis 1200 kg/m³. Die Dicke der Decklagen braucht im Hinblick auf eine gute Beschichtbarkeit, gute Biegefestigkeiten und Elastizitätsmodule der erfindungsgemäßen Holzwerkstoffplatte nicht mehr als ca. 0,5 bis 2 mm, bevorzugt 0,5 bis 1,2 mm zu betragen. Dadurch werden die Decklagen einerseits kostengünstig, andererseits haben dünne Decklagen in dem genannten Stärkenbereich nur einen geringen Einfluss auf die Rohdichte der erfindungsgemäßen Holzwerkstoffplatte. Die Herstellung solcher dünnen Decklagen in Form von MDF ist mit am Markt verfügbaren Technik im industriellen Maßstab kostengünstig möglich.

Die Mittellage der erfindungsgemäßen Holzwerkstoffplatte unterscheidet sich vom Stand der Technik dadurch, dass sie aufgrund ihrer geringen Verdichtung in der Regel über eine moderate Biegefestigkeit, einen geringen Elastizitätsmodul sowie aufgrund des Fehlens von feinen Deckschichten, wie sonst vor allem bei Möbelspanplatten üblich, über eine sehr schlechte Beschichtbarkeit verfügt. Dies wird bewusst in Kauf genommen, um bei der Mittellage ein geringes Gewicht in Verbindung mit einer guten Querzug- und Druckfestigkeit zu erzielen. Eine gute Biegefestigkeit, ein guter Elastizitätsmodul und eine hervorragende Beschichtbarkeit werden bei der erfindungsgemäßen, mehrlagigen Holzwerkstoffplatte durch das Aufbringen der sehr dünnen Decklagen aus vorzugsweise Dünn-MDF zwischen vorzugsweise 0,5 und 1,0 mm Dicke auf die Mittellage erzeugt. Aufgrund der hohen Druckfestigkeit und Querzugfestigkeit der Mittellage können die Decklagen so extrem dünn sein. Die Decklagen sind damit sehr kostengünstig und haben beim Gesamtgewicht der erfindungsgemäßen Holzwerkstoffplatte kaum einen Einfluss. Überdies sind sie deutlich leichter zu handhaben und können vor oder nach dem Aufleimen auf die Mittellage direkt lackiert oder auch bedruckt werden.

Bei Wabenplatten sowie anderen Sandwichkonstruktionen im Stand der Technik, bei denen Dünn-MDF als Decklagen zum Einsatz kommen, werden üblicherweise Decklagenstärken ab ca. 3 mm Stärke eingesetzt. Meist werden aufgrund der instabilen Wabenmittellagen aus Altpapier sogar noch dickere Holzwerkstoff-Decklagen bis ca. 5 mm Stärke eingesetzt, vor allem um ausreichende Biege- und Druckfestigkeiten zu erhalten. Bei Decklagen unter 3 mm Stärke würden solche Platten instabil. Eine punktuelle Druckbeanspruchung würde zu Schäden führen. Hier wird auch ersichtlich, warum solche üblichen Sandwichkonstruktionen bei Stärken unter ca. 20 mm weniger sinnvoll sind. Der Anteil der schweren Decklagen ist da aufgrund deren großer Dicken zu hoch. Das Verhältnis von Decklagen zu Mittellage wird ungünstig. Die Rohdichte der gesamten Sandwichkonstruktion wird zu hoch.

Der Einsatz von sehr dünnen MDF mit einer Dicke von vorzugsweise unter 1,0 mm bei der erfindungsgemäßen Holzwerkstoffplatte wirkt sich auch positiv auf die Herstellkosten der erfindungsgemäßen Holzwerkstoffplatte aus. MDF sind in der Regel doppelt so teuer wie Spanplatten, da man zu ihrer Herstellung aufgrund der Zerfaserung von Holz mehr Leim und Energie benötigt. Umso dünner die Decklage aus MDF, umso günstiger ist auch die gesamte Platte.

Dünn-MDF in der genannten Stärke von 0,5 bis 2,0 mm haben überdies gegenüber den bei Sperrhölzern eingesetzten Furnieren den Vorteil, dass sie in nahezu jedem Format herstellbar sind und keine Schälrisse wie Furniere aufweisen, die beim Beschichten, insbesondere beim Lackieren schädlich sein können. Überdies sind sie deutlich leichter zu handhaben.

Die homogen aufgebaute Mittellage garantiert das geringe Gewicht der erfindungsgemäßen Holzwerkstoffplatte. Durch die spezielle Spanstruktur, die spezielle Verpressungstechnik, vorzugsweise durch eine Dampf-/Heißluftinjektion und eine schonende Beleimung der Späne sorgt sie für gute Querzugfestigkeiten und Schraubenauszugswiderstände der erfindungsgemäßen Platte. Darüber hinaus ermöglicht die Mittellage eine Freiformbearbeitung, eine einfache Bekantung (Schmalflächenbeschichtung) und den Einsatz von üblichen Verbindungsmitteln, Beschlägen und Scharnieren.

Der Bindemittel-/Klebstoff-/Leimanteil der Mittellage der erfindungsgemäßen mehrlagigen Holzwerkstoffplatte beträgt abhängig vom Bindemittel-/Klebstoff-/Leimtyp vorzugsweise zwischen 3 und 25 %. Es können alle in der Holzwerkstoffindustrie gängigen Bindemittel/Klebstoffe/Leime, wie z.B. Polykondensationsleime oder Polyadditionsklebstoffe, zum Einsatz kommen. Eine besonders vorteilhafte Ausgestaltung der erfindungsgemäßen Aufgabe sieht den Einsatz von schäumenden Bindemitteln zur Verklebung der Späne der Mittellage vor. Hierzu können beispielsweise Polyurethane oder Bindemittel auf Basis natürlicher Rohstoffe eingesetzt werden. Dadurch können besonders feste und sehr leichte Mittellagen erzeugt werden, die überdies bei Einsatz von Polyurethanen feuchtebeständig sind.

Der Bindemittelanteil bei Einsatz von Polykondensationsleimen wie beispielsweise Harnstoff-Formaldehydleimen oder Melamin-Harnstoff-Phenol-Formaldehydleimen sollte zur Erzielung optimaler Festigkeitseigenschaften zwischen ca. 10 und 20 % Festharz, vorzugsweise zwischen 14 und 18 % Festharz (bezogen auf absolut trockene Späne) betragen. Bei Einsatz von Isocyanaten oder Polyurethanen sollte der Klebstoffanteil zwischen ca. 5 und 15 %, vorzugsweise zwischen 8 und 12 % betragen.

Zur Erzielung bestimmter Eigenschaften können brandinhibierende Mittel, Insektenschutzmittel, Pilzschutzmittel, Quellungsinhibitoren, Härtungsbeschleuniger, Formaldehydfänger oder andere Zusatzstoffe zudosiert werden. Der Zusatz von Streckmitteln oder Füllstoffen zur Leimflotte oder zu den Spänen bei der Mittellagenherstellung kann vorteilhaft sein, um die Sprödigkeit der Leimfugen herabzusetzen und um damit die Festigkeitseigenschaften der hergestellten Mittellage zu verbessern. Der Streckmittelzusatz z.B. in Form von Roggenmehl, Reisschalenmehl, Reismehl, Sojamehl oder Schleifstaub aus der Produktion sollte sich in einer Größenordnung zwischen 1 und 25 %, bezogen auf Festharz, vorzugsweise zwischen 5 und 15 %, bezogen auf Festharz bewegen, wobei der Zusatz des Streckmittels zur Leimflotte direkt oder zum Spangut vor oder nach der Beleimung erfolgen kann. Dies ist bei der Mittellage der erfindungsgemäßen Holzwerkstoffplatte aufgrund der geringen Rohdichte besonders einfach.

Die Beleimung des Spanmaterials sowie die Dosierung der Zusatzstoffe sollten sehr schonend erfolgen. Hier sollte eine Trommelbeleimung oder andere Beleimungsverfahren zum Einsatz kommen, bei denen die Späne im freien Fall beleimt werden. Eine Beleimung in Zwangsmischern mit Mischwerkzeugen wie in der Spanplattenherstellung üblich würde die Späne nachzerkleinern. Diese Beschädigung der Späne würde sich negativ auf die Eigenschaften der Mittellage auswirken.

Während die Herstellung der dünnen Decklagen mit klassischer kontinuierlicher Doppelbandpresstechnik bewerkstelligt werden kann, sollte die Herstellung der Mittelage vorteilhafterweise mit einer kontinuierlichen Presstechnik erfolgen, bei der Dampf oder eine Dampf/Heißluftgemisch zum Aushärten des Bindemittels durch das Spanvlies geleitet wird. Die Durchströmung des Spanvlieses erfolgt aufgrund der geringen Rohdichte der Mittelage sehr leicht. Die Aushärtung vollzieht sich dadurch sehr schnell. Die Produktion wird dadurch sehr wirtschaftlich.

Das Einleiten von Dampf oder eines Dampf-/Heißluftgemisches zum Verpressen der Mittelage ist außerdem besonders interessant im Hinblick auf die Erzeugung eines homogenen Rohdichteprofils der Mittellage. Aus diesem Grund ist der Einsatz klassischer kontinuierlicher Doppelbandpresstechnik nicht so vorteilhaft, obwohl er auch möglich ist. Hier würde ein eher U-förmiges Rohdichteprofil entstehen.

Da die Mittellage sehr leicht ist und ihre Verpressung daher nur relativ geringe Drücke von in der Regel deutlich unter 200 N/cm² erfordert, kann hierzu eine kontinuierliche Presstechnik verwendet werden, bei der Dampf oder ein Dampf/Heißluftgemisch zum Aushärten des Bindemittels durch das Spanvlies geleitet wird. Diese Presstechnik, die sonst nur zur Vorwärmung der Span- oder Fasermatte zum Einsatz kommt, ist aber alleine zur Herstellung einer klassischen Spanplatte oder MDF nicht geeignet. Die dort üblichen hohen Rohdichten erfordern höhere Drücke. Umgangssprachlich wird die vorstehend genannte Technik üblicherweise als Mattenvorwärmung bezeichnet. Überdies wäre der Einsatz einer solchen Mattenvorwärmung in Verbindung mit klassischer kontinuierlicher oder diskontinuierlicher Presstechnik denkbar, um noch größere Vorschubgeschwindigkeiten und damit noch größere Produktionskapazitäten zu realisieren.

Die Verpressung der Mittellage kann auch mit einer Presse erfolgen, die erst aus einer Art Dampf- oder Dampf-Heißluftinjektionspresse besteht und dann aus einer klassischen kontinuierlichen Presse mit Heizplatten, d.h. die Siebbänder der Dampf- oder Dampf-Heißluftinjektionspresse laufen anschließend wie das Siebband einer kontinuierlichen OSB-Presse mit durch die klassische kontinuierliche Presse um das Rückfedern der vorverpressten aber noch nicht ausgehärteten Mittellage bei der Übergabe aus dem Bereich der Dampfinjektionspresse in den Bereich der klassischen kontinuierlichen Presse zu vermeiden.

Im Hinblick auf das Herstellungsverfahren zeichnet sich die Mittelschicht zusammenfassend durch folgende Merkmale aus:
- Einsatz von speziell hergestellten, sehr voluminösen Spänen mit einer charakteristischen Spanstruktur und Zusammensetzung,
- Einsatz auch von Spänen mit erhöhter Feuchte bis ca. 20 % ohne Trocknung möglich,
- Beleimung durch spanschonende Verfahren wie z.B. Trommelbeleimung aus der OSB-Herstellung,
- Einsatz von klassischen Leimsystemen oder schäumenden Leimsystemen,
- Mechanische Streuung der Späne,
- Einschichtiger Aufbau durch eine Streumaschine,
- Verpressung vorzugsweise durch eine Dampf- oder kombinierte Dampf-/Heißluftinjektion bei sehr kurzen Pressfaktoren,
- Konditionieren der verpressten Mittellagen nach dem Verpressen.

Das Zusammenfügen von Decklagen mit der Mittelage kann durch kontinuierliche Presstechnik oder taktweise Presstechnik erfolgen. Besonders wirtschaftlich kann auch die Anwendung von Kalanderpresstechnik oder das Aushärten des Bindemittels der mit der Mittelage zusammengefügten Decklagen im Plattenstapel sein.

Zusammenfassend lassen sich somit folgende Vorteile gegenüber anderen Holzwerkstoffen feststellen:
- eine so genannte Freiformbearbeitbarkeit (Herstellung von Möbelteilen mit geschwungenen oder runden Formen)
- Beschichtbarkeit mit allen gängigen, festen Beschichtungsmaterialien und Lacken ohne weitere Vorbehandlung mit herkömmlicher Technik
- Einsatzmöglichkeit aller gängigen Verbindungsmittel, Beschläge und Scharniere
- Kostengünstiges Herstellungsverfahren
- Geringe Herstellungskosten
- Herstellbarkeit mit herkömmlichen industriellen Produktionsverfahren
- Herstellbarkeit in beliebigen Formaten bezogen auf Länge, Breite und Dicke
- Verarbeitung mit üblichen Holzbearbeitungsmaschinen im industriellen und handwerklichen Bereich
- Gute Festigkeitseigenschaften besonders im Hinblick auf Biegefestigkeit, Elastizitätsmodul, Querzugsfestigkeit, Schraubenauszugsfestigkeit
- Hohe Feuchtebeständigkeit
- Einsatz von Holz als Hauptbestandteil, Einsatz ökologischer Rohstoffe
- Leichte thermische Verwertbarkeit aufgrund des Holzeinsatzes
- Effiziente, wirtschaftliche Herstellung der Mittelage durch geringe Pressfaktoren aufgrund der geringen Dichte
- Effiziente, wirtschaftliche Herstellung der Decklagen durch geringe Pressfaktoren aufgrund der geringen Dicke
- Einsatz einfacherer und damit günstigerer Technik aufgrund der geringen Dichte der Mittellage wie der Gesamtplatte
- Für die Mittellage können aufgrund der geringen Rohdichte und dem dadurch bedingten, guten Ausgasungsverhalten auch Späne mit einer Feuchte bis zu ca. 20 % eingesetzt werden. Der hohe Trocknungsaufwand wie bei Spanplatten, bei deren Herstellung die Späne bis auf ca. 2 % getrocknet werden, ist nicht erforderlich.
- Größeres Anwendungsspektrum als klassische Holzwerkstoffe und andere neuartige leichte Werkstoffe
- Bearbeitbarkeit wie herkömmliche Spanplatten bei niedrigerer Dichte.

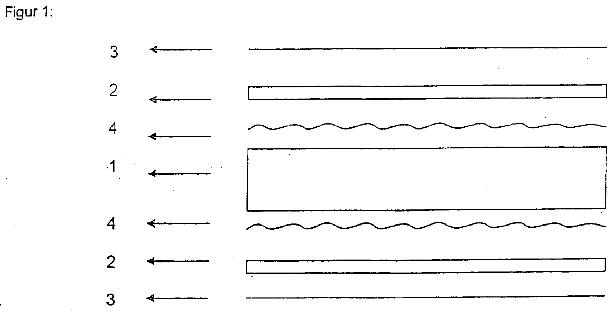

Im Hinblick auf eine hohe Wirtschaftlichkeit der Herstellung von beschichteten, erfindungsgemäßen, leichten Holzwerkstoffen aus mindestens drei Lagen gemäß Figur 1 könnte die Verpressung der Decklagen 2 vorteilhafterweise gleichzeitig mit dem Verpressen von Imprägnaten (auch als Melaminfilme, Laminate oder mit Tränkharzen imprägnierte Dekorpapiere bezeichnet) 3 oder anderen festen Beschichtungsmaterialien erfolgen. Dies ist möglich, da die Decklagen der erfindungsgemäßen Holzwerkstoffplatte nur sehr dünn sind und die Wärme dadurch noch gut über die Decklagen auf den flüssigen, auszuhärtenden Klebstoff 4 zwischen Decklagen 2 und Mittelage 1 übertragen wird. Der Klebstoff kann je nach Konzeption der Fertigungsanlage auf die Decklagenunterseiten oder auf die Oberflächen der Mittellage aufgetragen werden.

Als Klebstoff kommen hier z.B. PVAC-Leim, Harnstoff-Formaldehydleim oder Schmelzklebstoffe mit langer offener Zeit in Frage. Der Einsatz von Harnstoff-Formaldehydleim mit Zusatz von Streckmittel zum Füllen eventuell vorhandener kleinerer Löcher in den Oberflächen der Decklagen kann besonders vorteilhaft sein. Dadurch können noch dünnere Decklagen eingesetzt werden. Anstelle von flüssigem Klebstoff kann aus verfahrenstechnischen Gründen auch ein fester Klebstofffilm von Vorteil sein.

**Tabelle 1**

| Eigenschaft | Mittellage | Decklage | Erfindungsgemäße, leichte Holzwerkstoffplatte aus Decklagen und Mittellage | Herkömmliche Möbelspanplatte |
|---|---|---|---|---|
| Dicke [mm] | 17 | 1 | 19 | 19 |
| Rohdichte [kg/m³] | 320 | 900 | 385* | 660 |
| Querzugfestigkeit [N/mm²] | 0,25 | 0,8 | 0,25 | 0,35 |
| Biegefestigkeit [N/mm²] | 8 | n.b. | 12** | 12 |

| | | | | |
|---|---|---|---|---|
| *Die tatsächliche Rohdichte der erfindungsgemäßen, leichten Holzwerkstoffplatte ist etwas höher als die rechnerische Rohdichte, da noch ein Klebstoff zum Verbinden der Mittellage mit den Decklagen eingesetzt wird. Dieser wirkt sich gewichtserhöhend aus. Werden die Decklagen nach dem Aufleimen auf die Mittellage oberseitig geschliffen, was für bestimmte Anwendungszwecke vorteilhaft sein kann, ist die Rohdichte der Gesamtplatte wieder etwas geringer. Ein Kalibierschliff kann z.B. für eine Kurztaktbeschichtung von Vorteil sein. Die Decklagen können auch vor dem Aufleimen auf die Mittelage ein- oder beidseitig geschliffen werden, um z.B. eine genaue Kalibrierung der Decklagen zu erreichen. **Der Absperreffekt durch Verbinden von dünnen Decklagen mit einer leichten Mittellage wirkt sich erhöhend auf die Biegefestigkeit (und auch beim hier nicht aufgeführten E-Modul) aus. | | | | |

Die Eigenschaften variieren in Abhängigkeit der gewählten Parameter bei der Herstellung.

## Patentansprüche

1. Mehrlagige Holzwerkstoffplatte aus mindestens drei miteinander verleimten Lagen,
**dadurch gekennzeichnet,**
**dass** die mittlere Lage eine Dicke von 6 bis 200 mm aufweist und aus einer Spanplatte, deren Späne zwischen 10 und 40 mm lang und 0,2 und 1 mm dick sind, mit einer Rohdichte unter 500 kg/m³ besteht, die Späne der Mittellage zu 50 bis 80 % aus in Holzfaserrichtung zerspantem Holz bestehen und zu 20 bis 50 % aus nicht oder überwiegend nicht parallel in Holzfaserrichtung zerspantem Holz bestehen und die Decklagen Dicken von 0,5 bis 2 mm aufweisen und aus einer mitteldichten Faserplatte (MDF) bzw. HDF (High Density Fibreboard) oder aus, Furnier, HPL oder CPL bestehen, die eine Rohdichte zwischen 550 und 1400 kg/m³ aufweisen.

2. Mehrlagige Holzwerkstoffplatte nach Anspruch 1, **dadurch gekennzeichnet, dass** die Fasern der Decklagen inhomogen aufgebaut sind.

3. Mehrlagige Holzwerkstoffplatte nach Anspruch 1, **dadurch gekennzeichnet, dass** die mitteldichte Faserplatte (MDF) bzw. HDF (High Density Fibreboard) auf der die Außenseite bildenden Seite feinere Fasern aufweist, im Vergleich zu den Fasern, die auf der in Richtung der Mittellagen weisenden Seite vorhanden sind.

4. Mehrlagige Holzwerkstoffplatte nach einem der Ansprüche 1 bis 3, **dadurch gekennzeichnet, dass** die Decklagen eine Rohdichte zwischen 800 und 1200 kg/m³ aufweist.

5. Mehrlagige Holzwerkstoffplatte nach einem der Ansprüche 1 bis 4, **dadurch gekennzeichnet, dass** die Decklagen eine Dicke zwischen 0,5 und 1,2 mm Dicke aufweisen.

6. Mehrlagige Holzwerkstoffplatte nach einem der Ansprüche 1 bis 5, **dadurch gekennzeichnet, dass** die Decklagen aus mit Polyurethanen, Isocyanaten oder mit Polykondensationsklebstoffen gebundenen Dünn-MDF oder Dünn-Spanplatten bestehen.

7. Mehrlagige Holzwerkstoffplatte nach mindestens einem der Ansprüche 1 bis 6, **dadurch gekennzeichnet, dass** die Decklagen aus unterschiedlichen Materialien ausgewählt sind.

8. Mehrlagige Holzwerkstoffplatte nach mindestens einem der Ansprüche 1 bis 7, **dadurch gekennzeichnet, dass** die Decklagen bedruckt und/oder lackiert sind.

9. Mehrlagige Holzwerkstoffplatte nach einem der Ansprüche 1 bis 8, **dadurch gekennzeichnet, dass** die Decklagen mit Polyadditions- oder Polykondensationsklebstoffen auf die Mittellage verleimt sind.

10. Mehrlagige Holzwerkstoffplatte nach einem der Ansprüche 1 bis 9, **dadurch gekennzeichnet, dass** die Mittellage eine Rohdichte zwischen 200 und 400 kg/m³ aufweist.

11. Mehrlagige Holzwerkstoffplatte nach einem der Ansprüche 1 bis 10, **dadurch gekennzeichnet, dass** die Mittellage gleichmäßig dick und homogen aus einer Schicht Späne aufgebaut ist.

12. Mehrlagige Holzwerkstoffplatte nach einem der Ansprüche 1 bis 11, **dadurch gekennzeichnet, dass** die Mittellage aus Spänen mit einer sehr geringen Schüttdichte von unter 120 kg/m³, vorzugsweise mit einer Schüttdichte von unter 80 kg/m³ bezogen auf absolut trockenes Material aufgebaut ist.

13. Mehrlagige Holzwerkstoffplatte nach einem der Ansprüche 1 bis 12, **dadurch gekennzeichnet, dass** das in Holzfaserrichtung zerspante Holz Hobel- oder Frässpänen sind und das nicht oder überwiegend nicht parallel in Holzfaserrichtung zerspante Holz Späne aus einem Messerringzerspaner oder aus einer Mühle sind.

14. Mehrlagige Holzwerkstoffplatte nach einem der Ansprüche 1 bis 13, **dadurch gekennzeichnet, dass** die Späne der Mittellage aus leichten Holzarten, wie Fichte, Kiefer, Tanne, Weide oder Pappel, bestehen.

15. Mehrlagige Holzwerkstoffplatte nach einem der Ansprüche 1 bis 14, **dadurch gekennzeichnet, dass** die Mittellage abhängig vom Bindemitteltyp einen Bindemittelanteil zwischen 3 und 25 % aufweist.

16. Mehrlagige Holzwerkstoffplatte nach einem der Ansprüche 1 bis 15, **dadurch gekennzeichnet, dass** die Späne der Mittellage zwischen 0,2 und 0,6 mm dick sind.

17. Mehrlagige Holzwerkstoffplatte nach einem der Ansprüche 1 bis 16, **dadurch gekennzeichnet, dass** das Verhältnis der Dicke von Decklagen zu Mittellagen vorteilhafterweise ca. 1:4 bei einer 10 mm dicken erfindungsgemäßen Holzwerkstoffplatte, 1:9 bei einer 20 mm dicken Platte und 1:19 bei einer 40 mm dicken Platten beträgt.

18. Verfahren zur Herstellung einer mehrlagigen Holzwerkstoffplatte nach mindestens einem der Ansprüche 1 bis 17, **dadurch gekennzeichnet, dass** die mittlere Lage mit den Decklagen verleimt wird.

19. Verfahren nach Anspruch 18, **dadurch gekennzeichnet, dass** die Decklagen erst nach der Herstellung der Mittellage mit dieser verleimt-werden.

20. Verfahren nach Anspruch 18, **dadurch gekennzeichnet, dass** die Verleimung der Decklagen mit der Mittellage gleichzeitig mit der Herstellung der Mittellage beim Verpressen der Mittellage erfolgt.

21. Verfahren nach mindestens einem der Ansprüche 18 bis 20, **dadurch gekennzeichnet, dass** die Decklagen und die Mittellagen separat hergestellt werden.

22. Verfahren nach mindestens einem der Ansprüche 18 bis 21, **dadurch gekennzeichnet, dass** die Mittellage mit Polyadditions- oder Polykondensationsklebstoffen mit den Decklagen verleimt wird.

23. Verfahren nach mindestens einem der Ansprüche 18 bis 22, **dadurch gekennzeichnet, dass** die Späne der Mittellage mit einem schäumenden Bindemittel verleimt werden.

24. Verfahren nach mindestens einem der Ansprüche 18, 19 sowie 21 bis 23, **dadurch gekennzeichnet, dass** die Mittellage vor dem Verpressen mit den Decklagen geschliffen wird.

25. Verfahren nach mindestens einem der Ansprüche 18 bis 24, **dadurch gekennzeichnet, dass** die Decklagen mittels eines Imprägnates oder eines Klebstofffilms auf die Mittellage verpresst werden.

26. Verfahren nach mindestens einem der Ansprüche 18 bis 25, **dadurch gekennzeichnet, dass** die Decklagen bedruckt und/oder lackiert werden.

27. Verfahren nach mindestens einem der Ansprüche 18 bis 26, **dadurch gekennzeichnet, dass** die Decklagen mit einer Taktpresse oder einer kontinuierlich arbeitenden Presse mit der Mittellage verpresst werden.

28. Verfahren nach mindestens einem der Ansprüche 18 bis 27, **dadurch gekennzeichnet, dass** die Mittellage durch Verpressen von beleimten Spänen mit einer kontinuierlichen Doppelbandpresse oder einer kontinuierlich arbeitenden Dampfinjektionspresse bzw. Dampf-/Heißluftinjektionspresse hergestellt wird.

29. Verfahren nach mindestens einem der Ansprüche 18 bis 28, **dadurch gekennzeichnet, dass** die Mittellage durch Verpressen von beleimten Spänen mit einer taktweise arbeitenden Presse oder einer taktweise arbeitenden Dampfinjektionspresse hergestellt wird.

30. Verfahren nach Anspruch 29, **dadurch gekennzeichnet, dass** mit unterschiedlich arbeitenden Pressen, wie Dampf- oder Dampfheißluftinjektionspressen und Pressen mit Heizplatten gearbeitet wird.

31. Verfahren nach mindestens einem der Ansprüche 18 bis 30, **dadurch gekennzeichnet, dass** die Mittellage durch Verpressen von zu einem Kuchen gestreuten, beleimten Spänen durch Kombination einer Mattenvorwärmung mit einer kontinuierlichen Doppelbandpresse oder einer Taktpresse hergestellt wird.

32. Verwendung der Holzwerkstoffplatte nach einem der Ansprüche 1 bis 17 als Möbelspanplatte.

## Claims

1. A multi-layer derived timber product board of at least three layers glued to one another,
**characterised in that**
the middle layer has a thickness from 6 to 200 mm and consists of chipboard, whose chips are between 10 and 40 mm long and 0.2 and 1 mm thick, with a bulk density below 500 kg/m³, the chips of the middle layer are 50 to 80 % composed of wood chipped in the wood fibre direction, and 20 to 50% of wood which is chipped in a manner non-parallel or predominantly non-parallel in the wood fibre direction, and the face layers have thicknesses from 0.5 to 2 mm and consist of a medium density fibreboard (MDF) or high density fibreboard or of veneer, HPL or CPL, which have a bulk density between 550 and 1400 kg/m³.

2. A multi-layer derived timber product board according to claim 1, **characterised in that** the fibres of the face layers are assembled inhomogeneously.

3. A multi-layer derived timber product board according to claim 1, **characterised in that** on the side forming the exterior, the medium density fibreboard (MDF) or high density fibreboard (HDF) has finer fibres compared with the fibres present on the side directed in the direction of the middle layers.

4. A multi-layer derived timber product board according to any one of claims 1 to 3, **characterised in that** the face layers have a bulk density between 800 and 1200 kg/m³.

5. A multi-layer derived timber product board according to any one of claims 1 to 4, **characterised in that** the face layers have a thickness between 0.5 and 1.2 mm thickness.

6. A multi-layer derived timber product board according to any one of claims 1 to 5, **characterised in that** the face layers consist of thin MDF or thin chipboards bonded with polyurethane, isocyanates or with polycondensation adhesives.

7. A multi-layer derived timber product board according to at least one of claims 1 to 6, **characterised in that** the face layers are selected from different materials.

8. A multi-layer derived timber product board according to at least one of claims 1 to 7, **characterised in that** the face layers are printed and/or varnished.

9. A multi-layer derived timber product board according to any one of claims 1 to 8, **characterised in that** the face layers are glued onto the middle layer with polyaddition adhesives or polycondesation adhesives.

10. A multi-layer derived timber product board according to any one of claims 1 to 9, **characterised in that** the middle layer has a bulk density between 200 and 400 kg/m³.

11. A multi-layer derived timber product board according to any one of claims 1 to 10, **characterised in that** the middle layer is constructed in a uniformly thick and homogeneous manner from a layer of chips.

12. A multi-layer derived timber product board according to any one of claims 1 to 11, **characterised in that** the middle layer is constructed from chips with a very low bulk density of below 120 kg/m³, preferably with a bulk density of below 80 kg/m³ related to absolutely dry material.

13. A multi-layer derived timber product board according to any one of claims 1 to 12, **characterised in that** the wood chipped in the wood fibre direction is wood shavings or shaping chips, and the wood which is chipped in a manner non-parallel or predominantly non-parallel in the wood fibre direction is from a knife ring flaker or a mill.

14. A multi-layer derived timber product board according to any one of claims 1 to 13, **characterised in that** the chips of the middle layer are composed of light wood types such as spruce, pine, fir, willow or poplar.

15. A multi-layer derived timber product board according to any one of claims 1 to 14, **characterised in that** the middle layer has a binder proportion between 3 and 25% depending on the type of binder.

16. A multi-layer derived timber product board according to any one of claims 1 to 15, **characterised in that** the chips of the middle layer are between 0.2 and 0.6 mm thick.

17. A multi-layer derived timber product board according to any one of claims 1 to 16, **characterised in that** the ratio of the thickness of face layers to middle layers advantageously amounts to approximately 1:4 in the case of a derived timber product board according to the invention of 10 mm thickness, 1:9 in the case of a board of 20 mm thickness and 1:19 in the case of boards of 40 mm thickness.

18. A method for the manufacture of a multi-layer derived timber product board according to at least one of claims 1 to 17, **characterised in that** the middle layer is glued to the face layers.

19. A method according to claim 18, **characterised in that** the face layers are only glued to the middle layer after manufacture of the latter.

20. A method according to claim 18, **characterised in that** the gluing of the face layers to the middle layer takes place at the same time as the manufacture of the middle layer upon pressing of the middle layer.

21. A method according to at least one of the claims 18 to 20, **characterised in that** the face layers and the middle layers are manufactured separately.

22. A method according to at least one of claims 18 to 21, **characterised in that** the middle layer is glued to the face layers with polyaddition adhesives or polycondensation adhesives.

23. A method according to at least one of claims 18 to 22, **characterised in that** the chips of the middle layer are glued with a foaming binder.

24. A method according to at least one of claims 18, 19 and 21 to 23, **characterised in that** the middle layer is ground before pressing with the face layers.

25. A method according to at least one of claims 18 to 24, **characterised in that** the face layers are pressed onto the middle layer by means of an impregnate or an adhesive film.

26. A method according to at least one of claims 18 to 25, **characterised in that** the face layers are printed and/or varnished.

27. A method according to at least one of claims 18 to 26, **characterised in that** the face layers are pressed with the middle layer with a cycle press or a continuously working press.

28. A method according to at least one of claims 18 to 27, **characterised in that** the middle layer is manufactured by pressing of glue-covered chips with a continuous twin belt press or a continuously working steam injection press or steam and hot air injection press.

29. A method according to at least one of claims 18 to 28, **characterised in that** the middle layer is manufactured by pressing of glue-covered chips with a press working intermittently or a steam injection press working intermittently.

30. A method according to claim 29, **characterised in that** use is made of presses working differently, such as steam- or steam hot air injection presses and presses with steam plates.

31. A method according to at least one of claims 18 to 30, **characterised in that** the middle layer is manufactured by pressing of glue-covered chips, which have been scattered to form a cake, through the combination of a mat preheating with a continuous twin belt press or a cycle press.

32. Use of the derived timber product board according to any one of claims 1 to 17 as furniture chipboard.

## Revendications

1. Panneau multicouche dérivé du bois, constitué d'au moins trois couches collées les unes aux autres,
**caractérisé en ce que**
la couche centrale présente une épaisseur de 6 à 200 mm et se compose d'un panneau de copeaux, dont les copeaux présentent une longueur comprise entre 10 et 40 mm et une épaisseur comprise entre 0,2 et 1 mm, dont la masse volumique apparente est inférieure à 500 kg/m³, les copeaux de la couche centrale se composent de 50 à 80 % de bois déchiqueté dans le sens des fibres de bois, et de 20 à 50 % de bois déchiqueté dans le sens des fibres de bois, d'une manière non parallèle ou principalement non parallèle, et les couches de recouvrement présentent une épaisseur de 0,5 à 2 mm et se composent d'un panneau de fibres de densité moyenne (MDF) ou HDF (High Density Fibreboard), de bois de placage, de HPL ou de CPL, présentant une masse volumique apparente supérieure entre 500 et 1400 kg/m³.

2. Panneau multicouche dérivé du bois selon la revendication 1, **caractérisé en ce que** les fibres des couches de recouvrement présentent une structure non homogène.

3. Panneau multicouche dérivé du bois selon la revendication 1, caractérisé en ce le panneau de fibres de densité moyenne (MDF) ou HDF (High Density Fibreboard) comporte sur son côté formant la face externe des fibres plus fines que les fibres qui sont présentes sur la face dirigée dans le sens des couches centrales.

4. Panneau multicouche dérivé du bois selon l'une quelconque des revendications 1 à 3, **caractérisé en ce que** les couches de recouvrement présentent une masse volumique apparente comprise entre 800 et 1200 kg/m³.

5. Panneau multicouche dérivé du bois selon l'une quelconque des revendications 1 à 4, **caractérisé en ce que** les couches de recouvrement présentent une épaisseur comprise entre 0,5 et 1,2 mm.

6. Panneau multicouche dérivé du bois selon l'une quelconque des revendications 1 à 5, **caractérisé en ce que** les couches de recouvrement se composent de panneaux minces de MDF ou de panneaux minces de copeaux liés par des polyuréthanes, des isocyanates ou des adhésifs de polycondensation.

7. Panneau multicouche dérivé du bois selon au moins l'une quelconque des revendications 1 à 6, **caractérisé en ce que** les couches de recouvrement sont choisies parmi différents matériaux.

8. Panneau multicouche dérivé du bois selon au moins l'une quelconque des revendications 1 à 7, **caractérisé en ce que** les couches de recouvrement sont imprimées et/ou vernies.

9. Panneau multicouche dérivé du bois selon l'une quelconque des revendications 1 à 8, **caractérisé en ce que** les couches de recouvrement sont collées sur la couche centrale avec des adhésifs de polyaddition ou de polycondensation.

10. Panneau multicouche dérivé du bois selon l'une quelconque des revendications 1 à 9, **caractérisé en ce que** la couche centrale présente une masse volumique apparente comprise entre 200 et 400 kg/m³.

11. Panneau multicouche dérivé du bois selon l'une quelconque des revendications 1 à 10, **caractérisé en ce que** la couche centrale présente une structure uniformément épaisse et homogène, constituée d'une couche de copeaux.

12. Panneau multicouche dérivé du bois selon l'une quelconque des revendications 1 à 11, **caractérisé en ce que** la couche centrale est constituée de copeaux présentant une très faible masse volumique apparente, inférieure à 120 kg/m³, de préférence une masse volumique apparente inférieure à 80 kg/m ³ rapportée au matériau sec absolu.

13. Panneau multicouche dérivé du bois selon l'une quelconque des revendications 1 à 12, **caractérisé en ce que** le bois déchiqueté dans le sens des fibres de bois est des copeaux de rabotage ou de fraisage, et le bois déchiqueté dans le sens des fibres de bois, d'une manière non parallèle ou principalement non parallèle, est des copeaux issus d'une déchiqueteuse à couteau annulaire ou un broyeur.

14. Panneau multicouche dérivé du bois selon l'une quelconque des revendications 1 à 13, **caractérisé en ce que** les copeaux de la couche centrale se composent d'espèces de bois légers, comme l'épicéa, le pin, le sapin, le saule ou le peuplier.

15. Panneau multicouche dérivé du bois selon l'une quelconque des revendications 1 à 14, **caractérisé en ce que** la couche centrale présente, indépendamment du type de liant, une proportion de liant comprise entre 3 et 25 %.

16. Panneau multicouche dérivé du bois selon l'une quelconque des revendications 1 à 15, **caractérisé en ce que** les copeaux de la couche centrale présentent une épaisseur comprise entre 0,2 et 0,6 mm.

17. Panneau multicouche dérivé du bois selon l'une quelconque des revendications 1 à 16, **caractérisé en ce que** le rapport entre l'épaisseur des couches de recouvrement et l'épaisseur des couches centrales est avantageusement d'environ 1/4 pour un panneau dérivé du bois selon l'invention présentant une épaisseur de 10 mm, de 1/9 pour un panneau présentant une épaisseur de 20 mm et de 1/19 pour un panneau présentant une épaisseur de 40 mm.

18. Procédé de fabrication d'un Panneau multicouche dérivé du bois selon l'une quelconque des revendications 1 à 17, **caractérisé en ce que** la couche centrale est collée aux couches de recouvrement.

19. Procédé selon la revendication 18, **caractérisé en ce que** les couches de recouvrement ne sont collées à celle-ci qu'après la fabrication de la couche centrale.

20. Procédé selon la revendication 18, **caractérisé en ce que** le collage des couches de recouvrement à la couche centrale a lieu en même temps que la fabrication de la couche centrale lors du pressage de la couche centrale.

21. Procédé selon au moins l'une quelconque des revendications 18 à 20, **caractérisé en ce que** les couches de recouvrement et les couches centrales sont fabriquées séparément.

22. Procédé selon au moins l'une quelconque des revendications 18 à 21, **caractérisé en ce que** la couche centrale est collée aux couches de recouvrement avec des adhésifs de polyaddition ou de polycondensation.

23. Procédé selon au moins l'une quelconque des revendications 18 à 22, **caractérisé en ce que** les copeaux de la couche centrale sont collés avec un liant moussant.

24. Procédé selon au moins l'une quelconque des revendications 18 à 19 ainsi que 21 à 23, **caractérisé en ce que** la couche centrale est poncée avant pressage avec les couches de recouvrement.

25. Procédé selon au moins l'une quelconque des revendications 18 à 24, **caractérisé en ce que** les couches de recouvrement sont pressées sur la couche centrale au moyen d'un produit d'imprégnation ou d'un film adhésif.

26. Procédé selon au moins l'une quelconque des revendications 18 à 25, **caractérisé en ce que** les couches de recouvrement sont imprimées et/ou vernies.

27. Procédé selon au moins l'une quelconque des revendications 18 à 26, **caractérisé en ce que** les couches de recouvrement sont pressées avec la couche centrale à l'aide d'une presse à alimentation intermittente ou d'une presse fonctionnant en continu.

28. Procédé selon au moins l'une des revendications 18 à 27, **caractérisé en ce que** la couche centrale est fabriquée par compression de copeaux encollés à l'aide d'une presse continue à double bande ou d'une presse à injection de vapeur ou d'une presse à injection de vapeur/air chaud fonctionnant en continu.

29. Procédé selon au moins l'une quelconque des revendications 18 à 28, **caractérisé en ce que** la couche centrale est fabriquée par pressage de copeaux collés, avec une presse fonctionnant par intermittence ou une presse à injection de vapeur fonctionnant par intermittence.

30. Procédé selon la revendication 29, **caractérisé en ce que** l'on travaille avec des presses fonctionnant différemment, telles que des presses à injection de vapeur ou de vapeur d'air chaud et des presses à plaques chauffantes.

31. Procédé selon au moins l'une quelconque des revendications 18 à 30, **caractérisé en ce que** la couche centrale est fabriquée par pressage de copeaux collés, dispersés pour former un gâteau, par combinaison d'un préchauffage de la nappe et d'une presse continue à double bande ou d'une presse à alimentation intermittente.

32. Utilisation du panneau dérivé du bois selon l'une quelconque des revendications 1 à 17 en tant que panneau de copeaux pour meubles.
